# EUROPÄISCHE PATENTSCHRIFT

(11) **EP 0 704 778 B1**
(45) Veröffentlichungstag und Bekanntmachung des Hinweises auf die Patenterteilung: **03.03.1999**
(21) Anmeldenummer: 95115355.0
(22) Anmeldetag: 28.09.1995
(51) Int. Cl.: G05B 13/02, F01K 17/02

(54) **Verfahren zur Energieverteilung in Systemen und zugehörige Anordnung**
Method for distributing power in systems and arrangement therefor
Procédé de distribution d'énergie dans des installations et dispositif pour sa mise en oeuvre

(30) Priorität: 30.09.1994 DE 4435038
(43) Veröffentlichungstag der Anmeldung: 03.04.1996
(73) Patentinhaber: SIEMENS AKTIENGESELLSCHAFT, 80333 München (DE)
(72) Erfinder: Furumoto, Herbert, Dr., D-91052 Erlangen (DE)

(56) Entgegenhaltungen:
- BWK BRENNSTOFF WARME KRAFT, Bd. 41, Nr. 6, Juni 1989 Seiten 273-277, XP 000027996 FUIERER P ET AL 'TAGESEINSATZOPTIMIERUNG FUR KRAFTWERKS-SYSTEME MIT KRAFT-WARME-KOPPLUNG'
- AUTOMATISIERUNGSTECHNISCHE PRAXIS - ATP, Bd. 35, Nr. 5, 1.Mai 1993 Seiten 306-309, XP 000369648 BORK P ET AL 'FUZZY CONTROL ZUR OPTIMIERUNG DER KUEHLWASSERAUFBEREITUNG AN EINER CHEMIE-REAKTORANLAGE FUZZY CONTROL OPTIMIZATION OF THE COOLING WATER PREPARATION FOR A CHEMICAL REACTOR PLANT'
- TECHNISCHE RUNDSCHAU, Bd. 85, Nr. 24, 18.Juni 1993 Seiten 28-33, XP 000378570 LIPP H P 'MEHR FLEXIBILITAET DURCH UNSCHAERFE'
- PATENT ABSTRACTS OF JAPAN vol. 18 no. 113 (E-1514) ,23.Februar 1994 & JP-A-05 308727 (DAIOO ENG KK) 19.November 1993,

## Beschreibung

Die Erfindung bezieht sich auf ein Verfahren zur Energieverteilung in Systemen, insbesondere in komplexen technischen Anlagen mit einer Mehrzahl von Teilanlagen, mit Mitteln zur Umwandlung von primären Energieträgern in elektrische Energie einerseits und in Prozeßdampf andererseits und mit mehreren Energieverbrauchern. Daneben bezieht sich die Erfindung auch auf die zugehörige Anordnung zur Durchführung eines solchen Verfahrens. Als System kann dabei jede Anlage, bei der Energie unterschiedlicher Art zeitlich und mengenmäßig variabel erzeugt und verbraucht wird, verstanden werden.

In Industrieanlagen wird Energie häufig in Form von elektrischer Energie einerseits und als Prozeßdampf andererseits benötigt. Üblicherweise ist die Umwandlung der primären Energieträger in die elektrische Energie und in den Prozeßdampf bei einer gegebenen technischen Anlage durch die Leistungsfähigkeit der vorhandenen Dampferzeuger bzw. Turbinen begrenzt. Die Endverbraucher nehmen aber im unterschiedlichen Maße die bereitgestellte Energie bzw. Dampf ab. Sowohl für die Endverbraucher als auch für die Dampferzeuger und die Turbinen gibt es Arbeitsbereiche, in denen ihre Wirkungsgrad maximal oder nahe am Maximum liegen. Die Gesamtanlage fährt hinsichtlich ihres spezifischen Energieverbrauches optimal, wenn alle Teilanlagen in ihrem Arbeitsbereich betrieben werden.

Üblicherweise werden die Energieerzeuger wie Dampferzeuger und Turbinen entsprechend der Energieabnahme an- bzw. abgeschaltet. Beim Erreichen der Leistungsgrenzen der Dampferzeuger bzw. der Turbinen müssen die Energiebezüge der Energieabnehmer limitiert werden, wozu eventuell bestimmte Verbraucher abzuschalten sind. Sofern vorhanden, wären zusätzlich weitere Dampferzeuger und Turbinen zuzuschalten, welche aber wiederum in einem wirtschaftlichen Arbeitsbereich arbeiten sollen.

Bisher wird die Energieverteilung in Industrieanlagen entsprechend dem Erfahrungswissen der Anlagenfahrer vorgewählt, wobei die Verbraucher ihren Energiebedarf in vollem Umfang zugeteilt bzw. limitiert bekommen oder die Energiezuteilung sogar abgeschaltet wird. Bei komplexen Systemen wird versucht, Prozeßrechner oder Automatisierungssysteme zur Hilfe zu nehmen, wobei vorrangig mathematische Modelle und Bilanzierungsmethoden eingesetzt werden. Ein derartiges System ist zur Tageszeitoptimierung für Kraftwerkssysteme mi Kraft-Wärme-Kopplung aus BWK Brennstoff Wärme Kraft, Bd. 41, Nr. 6 (Juni 1989), bekannt.

Aufgabe der Erfindung ist es demgegenüber, die Energieverteilung in Systemen, insbesondere in technischen Anlagen mit einer Mehrzahl von Teilanlagen, zu verbessern und eine zugehörige Anordnung anzugeben.

Die Aufgabe ist erfindungsgemäß dadurch gelöst, daß zur optimalen Energieverteilung im System, bei dem alle Teilanlagen in ihrem Arbeitsbereich betrieben werden, Fuzzy-Logik eingesetzt wird, wobei die von einzelnen Verbrauchern abzunehmenden Energiemengen zyklisch mit Hilfe der Fuzzy-Regeln festgelegt werden und wobei die Fuzzy-Regeln Informationen der einzelnen Verbraucher über deren aktuellen Elektroenergie-und Dampfbezug, deren jetzigen und zukünftigen Energiestatus und die Dringlichkeit der Energielieferung für die Aufrechterhaltung der Produktion enthalten. Bei der zugehörigen Anordnung zur Durchführung des Verfahrens ist zwischen den Turbinen und/oder den Kesseln und den Verbrauchern wenigstens ein Fuzzy-System angeordnet, wobei das Fuzzy-System aus einem ersten Block zur Bewertung der gesamten Situation, einem zweiten Block zur Bewertung der Verbraucher und einem dritten Block zum Festlegen der Einzelbezüge an Energie besteht. In erfinderischer Weiterbildung kann darüber hinaus Fuzzy-Logik mit Petri-Netzen kombiniert werden. Damit läßt sich die Energieverteilung insbesondere bei einer Zellstoff- und/oder Papierfabrik als Produktionsanlage, die im wesentlichen durch einen variablen Dampfverbrauch der Teilanlagen gekennzeichnet ist, sowohl hinsichtlich der Dampferzeugung als auch dem diesbezüglichen Verbrauch optimieren.

Fuzzy-Logik und/oder Petri-Netze sind vom Stand der Technik zwar bereits bekannt, beispielsweise "Automatisierungstechnische Praxis", Bd. 35, Nr. 5 (Mai 1993), Seiten 306 bis 309, und "Technische Rundschau", Bd. 85, Nr. 24 (18. Juni 1993), Seiten 28 bis 33. Mit derartigen Systemen können allerdings nur einfache Automatisierungsaufgaben, insbesondere zur Regulierung von Stoffströmen, bearbeitet werden.

Bei der Erfindung ist vorteilhaft, daß neben dem Wissen aus mathematischen Modellen und aus verschieden Bilanzierungsmethoden nunmehr auch das Erfahrungswissen der Betreiber der Anlage mit Hilfe der Fuzzy-Logik in das Automatisierungssystem, das die Energieverteilung und die Energieerzeugung koordiniert, umgesetzt wird. Die optimale Energieverteilung im komplexen Netz kann derart erfolgen, daß zyklisch die maximal von den einzelnen Verbrauchern abzunehmenden Energiemengen mit Hilfe von Fuzzy-Regeln festgelegt werden. Innerhalb dieser Grenzen kann die Teilanlage, d.h. der einzelne Verbraucher, seinen Energieverbrauch lokal optimieren.

Im Rahmen der Erfindung können auch Beschränkungen in der Dampfentnahmegeschwindigkeit vorgegeben werden. In bestimmten Situationen können Regeln für eine minimale Abnahme für bestimmte Verbraucher existieren.

Die für das System wesentlichen Fuzzy-Regeln können Informationen der einzelnen Energieabnehmer zu ihren aktuellen Elektroenergie- und/oder Dampfbezug ihren jetzigen und zukünftigen Energiestatus und die Dringlichkeit der Energielieferung für die Aufrechterhaltung der Produktion enthalten. Dafür werden Informationen aus Online-Meßdaten gewonnen.

Weitere Einzelheiten und Vorteile der Erfindung ergeben sich aus den nachfolgenden Figurenbeschreibung von Ausführungsbeispielen anhand der Zeichnung. Es zeigen als Blockschaltbilder
- FIG 1: eine Gesamtanlage zur Energieverteilung mit Fuzzy-Logik als Übersichtsplan,
- FIG 2: eine Spezifizierung der FIG 1 auf der Verbraucherseite,
- FIG 3: die Fuzzy-Bewertung der Prioritäten der Verbraucher,
- FIG 4: die Berechnung der Bezüge der einzelnen Verbraucher,
- FIG 5: eine Spezifizierung der FIG 1 auf der Erzeugerseite,
- FIG 6: die Wirkungskennlinie eines Dampferzeugers,
- FIG 7: die Wirkungskennlinie einer Turbine,
- FIG 8: ein zu FIG 6 zugehöriges Fuzzy-Set,
- FIG 9: ein zu FIG 7 zugehöriges Fuzzy-Set und
- FIG 10: die Einbindung von Fuzzy-Regeln aus FIG 8 und 9 zur Erstellung eines Fuzzy-Petri-Netz-Modells zur Anwendung bei einer integrierten Zellstoff- und Papierfabrik.

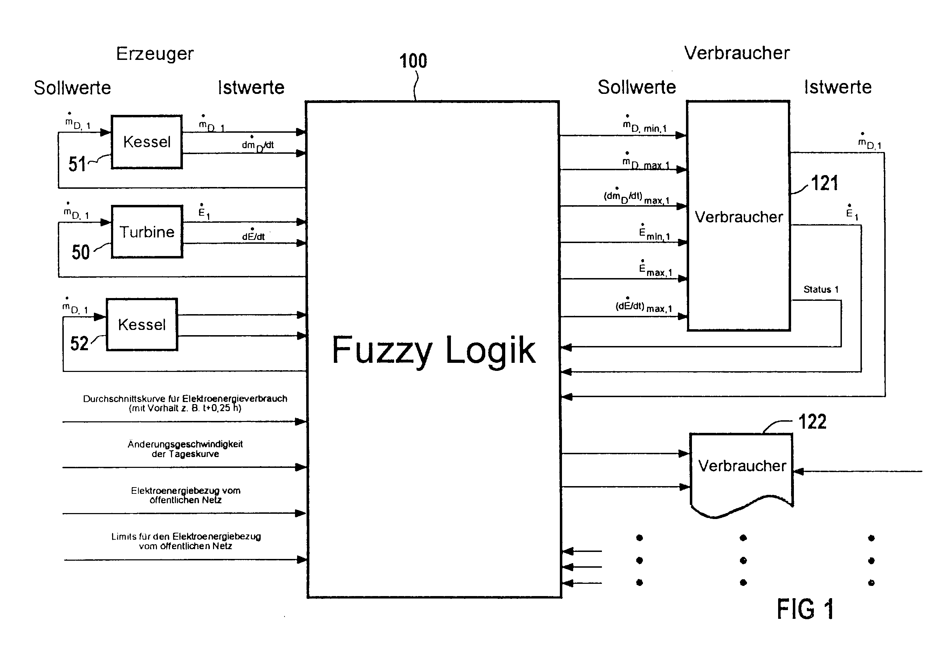

In FIG 1 ist ein Fuzzy-System durch 100 gekennzeichnet. In das Fuzzy-System 100 werden die Daten von Energieerzeugern, wie beispielsweise von einzelnen Kesseln 51 und 52, die zur Dampferzeugung dienen, und beispielsweise einer Turbine 50, die zur Erzeugung elektrischer Energie dient, eingespeist. Weiterhin sind andere Parameter eingebbar, auf die nachfolgend noch im einzelnen ausgegangen wird. Dem Fuzzy-System 100 sind Verbraucher 121, 122 etc. nachgeschaltet.

Den Energieerzeugern 50 bis 52 einerseits und den Verbrauchern 121, 122 etc. andererseits sind jeweils Sollwerte und Istwerte zugeordnet: Beispielsweise erhalten die Kessel 51 und 52 Sollwerte für die Dampfabgabe als Massestrom *ṁ*=M, d.h. M_{D,i}(i=1,2). Als Istwerte werden die aktuelle Dampfabgabe M_{D},ᵢ (i=1,2) und deren Änderungsgeschwindigkeit dM_{D}/dt ausgegeben. Sinngemäß entsprechendes erfolgt für die Turbine 50, wobei hier als Sollwert M_{D,1} eingegeben und als Istwerte die aktuellen Werte der Leistungsabgabe *Ė*₁ bzw. deren Änderungsgeschwindigkeit d*Ė*/dt in das Fuzzy-System 100 ausgegeben werden. Weiterhin werden noch Durchschnittskurven für den Elektroenergieverbrauch, bspw. mit einem zeitlichen Vorhalt von t + 0,25h, Änderungsgeschwindigkeiten der Tageskurven, ein Elektroenergiebezug vom öffentlichen Netz sowie zugehörige Limits für den maximal zulässigen Energiebezug vom öffentlichen Netz als Parameter eingegeben. Insbesondere die Daten für die Elektroenergie lassen sich entweder als Durchschnittstageskurve für den Gesamtverbrauch im bestehenden Netz oder als Fabrikverbrauchskurve definieren.

Als Ausgangsgrößen aus dem Fuzzy-System 100 gelangen an die Verbraucher 121, 122 neben den bereits erwähnten Sollwerten für die Erzeuger weiterhin Minimal- und Maximalwerte des Massestroms, Minimal- und Maximalwerte der Änderungsgeschwindigkeit des Dampfes sowie Minimal- und Maximalwerte der elektrischen Leistungsabgabe. Speziell am Verbraucher 121 ist der Massestrom M_{D},₁ und die zeitliche Energieabgabe *Ė*₁ als Ausgangsgröße auf das Fuzzy-System 100 zurückgekoppelt. Zusätzlich wird ein Status-Signal, welches abhängig vom aktuellen Betriebszustand des Verbrauchers 121 ist, auf das Fuzzy-System 100 zurückgekoppelt. Für die weiteren Verbraucher 122 ff. gilt sinngemäß der gleiche Aufbau.

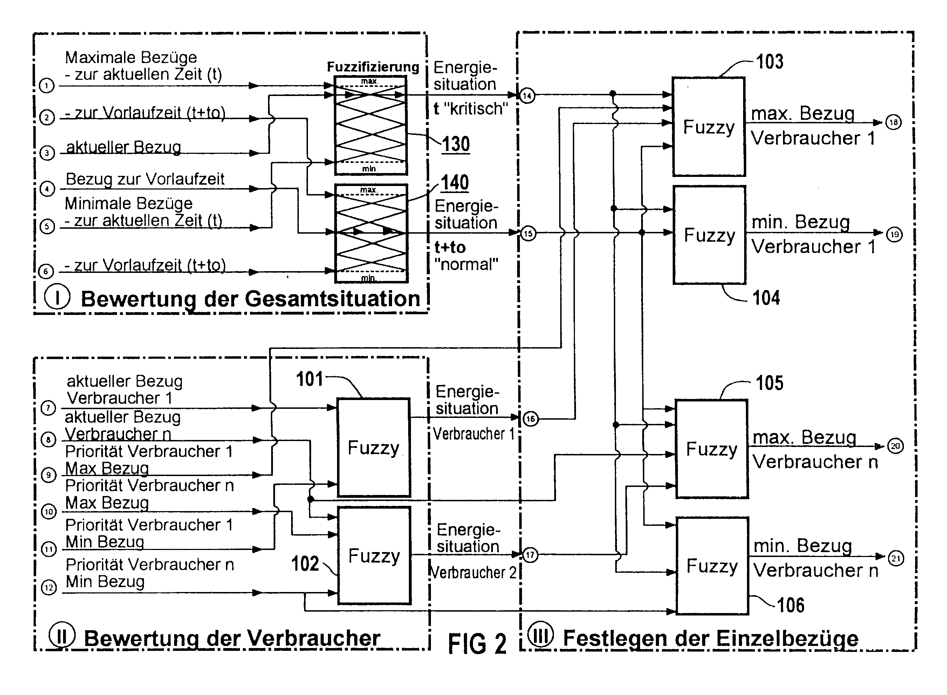

In FIG 2 ist das Fuzzy-System 100 der FIG 1 im wesentlichen in drei Blöcke aufgeteilt: Block I liefert die Bewertung der Gesamtsituation des Energieverbrauches, Block II die Bewertung der einzelnen Verbraucher und Block III die Festlegung der einzelnen Bezüge. Dazu werden im einzelnen die gekennzeichneten Eingangsgrößen auf einzelne Fuzzy-Einheiten 101 bis 105 gegeben und gelangen von dort zu den zugehörigen Verbrauchern. Zur Verdeutlichung des Signalflusses sind die Signalgrößen numeriert.

Wesentlich bei der Darstellung gemäß FIG 2 ist der Block I, der zur Bewertung der Gesamtsituation die sich ändernden Randbedingungen berücksichtigen kann. Zur Fuzzyfizierung werden dazu die Maximal- und Minimalwerte der Verbraucher auf Einheiten 130, 140 gegeben, die es erlauben, im Rahmen der Fuzzifizierung der Eingangsgrößen die jeweiligen Zugehörigkeitsfunktionen zu stauchen oder zu dehnen. Letzteres wird für den allgemeinen Fall in der älteren deutschen Patentanmeldung P 44 25 674.4 vorgeschlagen und im einzelnen erläutert. Dies kann online erfolgen, womit den sich ändernden Randbedingungen Rechnung getragen werden soll.

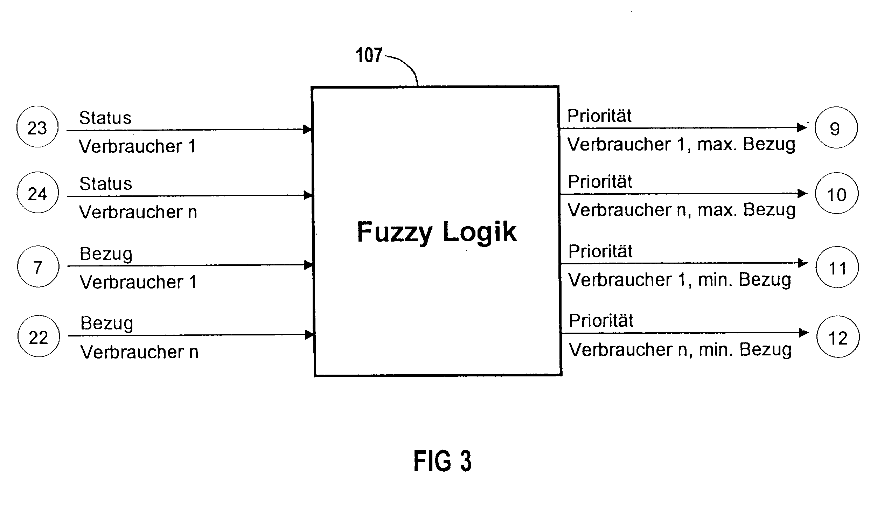

In FIG 3 ist ein Fuzzy-System 107 vorhanden, in das als Eingangssignale der Status und der Bezug der einzelnen Verbraucher eingebbar ist. Als Ausgangssignale werden die Priorität der Einzelverbraucher für Maximalbezug einerseits und Minimalbezug andererseits ausgegeben. Durch ein solches System läßt sich bei einem komplexen Produktionsprozeß, beispielsweise bei der Papierherstellung mit einer Vielzahl von Einzelschritten festlegen, welcher Produktionsschritt die höchste Priorität hat und insofern in jedem Fall mit einer diesbezüglichen Energiezuteilung zu bedienen ist.

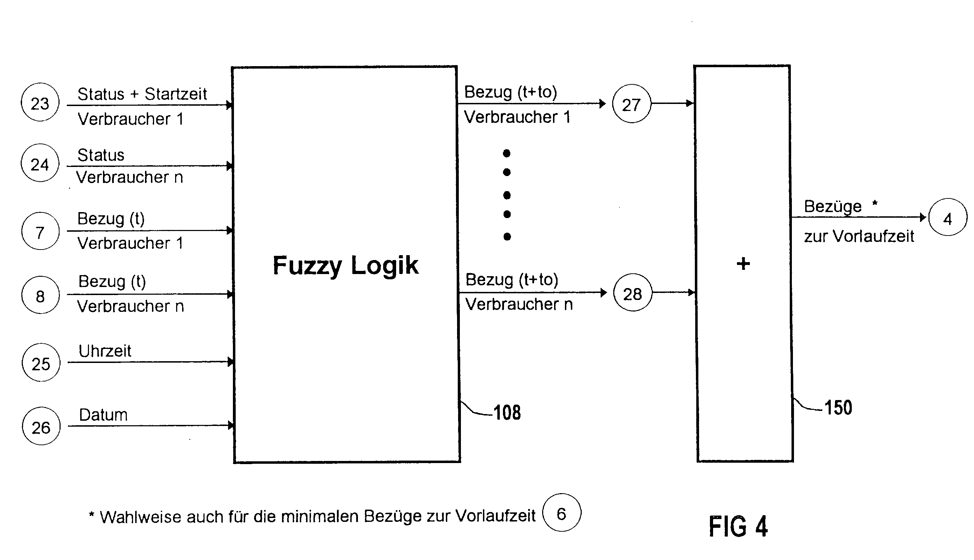

Bei Berücksichtigung der Bewertung der Prioritäten gemäß FIG 3 lassen sich anhand von FIG 4 die Bezüge der Einzelverbraucher zu einer Vorlaufzeit t +tₒ berechnen, wodurch sich Entnahmekurven der einzelnen Verbraucher realisieren lassen. In FIG 4 ist ein Fuzzy-System 108 dargestellt, in welches neben den Signalen gemäß FIG 3 als weitere Eingangsgrößen insbesondere noch die Tageszeit und das zugehörige Datum eingespeist werden. Die Ausgangsgrößen für die Verbraucher 1 bis n zum Zeitpunkt t + tₒ werden auf einen Summierer 150 gegeben, dessen Ergebnis die notwendigen Energiebezug zur Vorlaufzeit definiert.

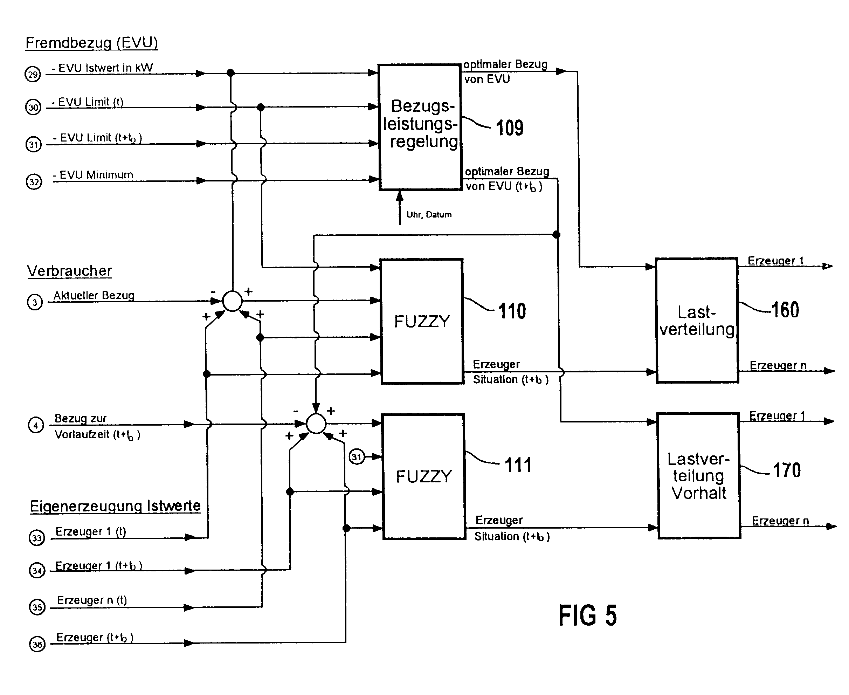

In der FIG 5 sind zur Optimierung der Energieerzeugung weitere Fuzzy-Systeme 109, 110 und 111 vorhanden, welche insbesondere den Energiefremdbezug von anderen Energieversorgungsunternehmen (EVU) mit der Eigenerzeugung der vorhandenen Turbinen und dem aktuellen Verbrauch mit dem Bezug zur Vorlaufzeit der einzelnen Verbraucher kombiniert. Als Ausgangssignale wird der optimale Bezug des EVU mit der Erzeugersituation der vorhandenen Anlage kombiniert und in einer Einheit 150 zur Lastverteilung bei den vorhandenen Erzeugern 1 bis n aufbereitet. Gleichermaßen werden die Werte mit der Vorlaufzeit t + t0 berechnet, woraus sich ein Lastverteilungsvorhalt ergibt.

Anhand der vorstehend beschriebenen Figuren lassen sich für das Zuschalten der Dampferzeuger und der Turbinen und dem Elektroenergiebezug aus dem Netz Regeln aufstellen. Insbesondere die Regeln für den Elektroenergiebezug aus Fremdnetzen können als Information entsprechend FIG 5 auf die Durchschnittstageskurven vom Gesamtenergieverbrauch im betreffenden Netz zugreifen. Dabei werden vor allem Informationen über die zu erwartenden Energieverbräuche genutzt. Gibt es bei den Verbrauchern zeitzyklische Verbrauchskurven, werden diese für solche Regeln, die der Energieplanung dienen genutzt. Beispielsweise sind bestimmte Energieverbräuche in Zeitintervallen zu erwarten, wobei die diesbezüglichen Tastzeiten abhängig sind von Anlaufzeit der Energieerzeuger und der notwendigen Abstell- und Koordinierungszeiten für die anderen Verbraucher.

Insgesamt ergibt sich aus den FIG 1 bis 5, daß konkrete Regeln, nach denen im Einzelfall die Koordinierung der Energieerzeugung und des Verbrauchers erfolgt, sehr stark von der vorhandenen Anlage, der Leistung und Anzahl der Erzeuger sowie der Struktur und Charakteristik der Verbraucher abhängen können. Als zugehörige Wenn-Dann-Beziehung ergibt sich beispielsweise:
- Gesamtdampfentnahme, d.h. Summe aller Dampfverbräuche: **kritisch** UND Status des Verbrauchers 1: **sehr klein** → DANN maximal erlaubte Dampfentnahme für den Verbraucher 1: **klein** oder **sehr klein**,
- Dampferzeugung Kessel 1: **sehr sehr hoch** UND Gesamtenergieverbrauch: **sehr hoch** UND Durchschnittstageskurve in 30 min: **sehr stark steigend** UND Dampferzeugung Kessel 2: **praktisch Null**
   → DANN Dampfsollwert Kessel 2: Anfahrmenge, d.h. Anfahren des Kessels 2.

Die beschriebenen Fuzzy-Methoden können mit konventionellen Verfahren zur Ermittlung der Eingangsgrößen in die Fuzzy-Systeme, wie z.B. Verfahren zur Ermittlung der Durchschnittskurven für Elektroenergie, d.h. der Tageskurve, zusammenarbeiten.

Eine solche Art der übergeordneten Energieverteilung ermöglicht es, daß einzelne Verbraucher bzw. Erzeuger innerhalb dieser Grenzen mit jeweils eigener Optimierungsstrategie arbeiten und in diesem Arbeitsbereich ihren optimalen Arbeitspunkt anstreben.

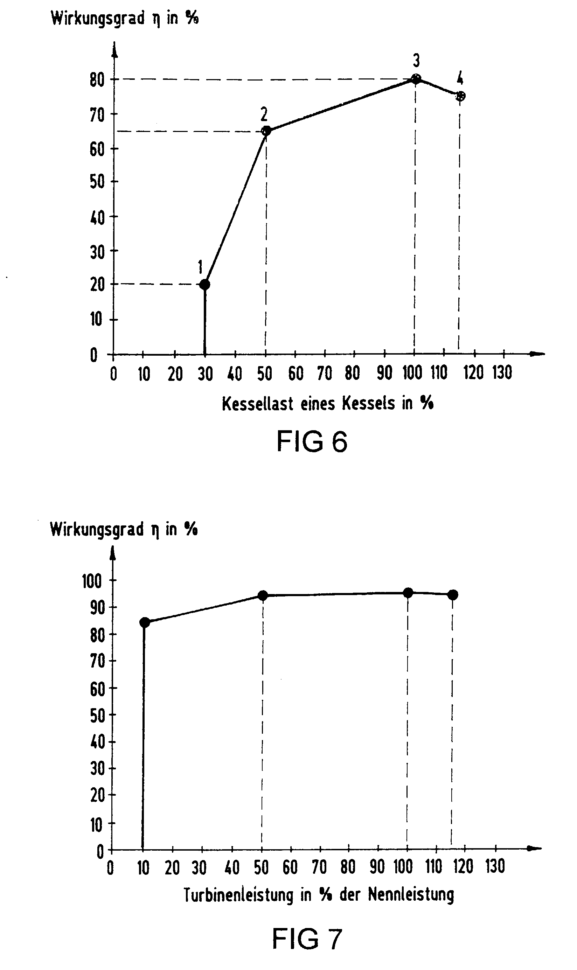

In Figur 6 ist eine Wirkungskennlinie eines einzelnen Kessels beispielhaft dargestellt. Aufgetragen ist der Wirkungsgrad über der Kessellast des Kessels in Prozent, wobei sich bei 100 % Kessellast naturgemäß ein Maximum in der Wirkungskennlinie ergibt. Die zugehörigen Punkte 1 bis 4 wurden bei einem mit Gas betriebenen Kessel ermittelt. Im Prinzip ergeben sich bei Verwendung anderer fossiler Energieträger entsprechende Kennlinien, wobei jeweils der Einsatzpunkt 1 verschoben ist. Beispielsweise für Braunkohle nicht bei 20 %, sondern bei 50 % Wirkungsgrad beginnt.

Sinngemäß entsprechendes ist in der FIG 7 beispielhaft für eine Turbine dargestellt: Der Wirkungsgrad einer Turbine liegt üblicherweise zwischen 80 und 95 %, wobei bereits bei 10 % Turbinenleistung ein Wirkungsgrad von 85 % vorliegt, bei 50 % Turbinenleistung ein Wirkungsgrad über 90 % erreicht ist und das Maximum wiederum bei 100 % liegt.

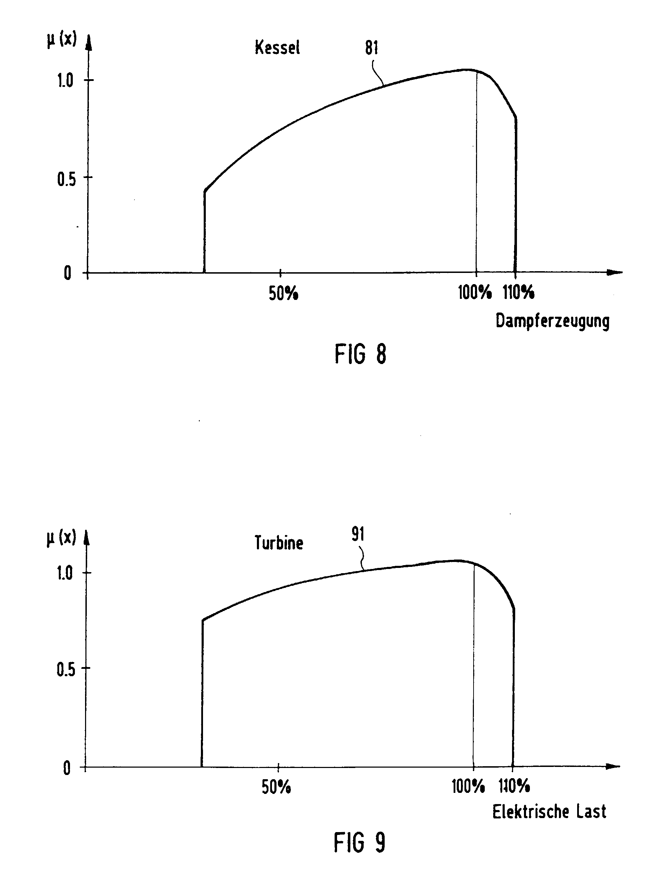

In den FIG 8 und 9 sind aus den Wirkungskennlinien der FIG 6 und 7 die sogenannten Fuzzy-Sets abgeleitet, welche die Zugehörigkeit zur jeweiligen Energieerzeugung beschreiben. Die Graphen 81 und 91 stellen dabei Zugehörigkeitsfunktionen µ(x) dar, welche den Wahrheitsgrad der jeweils unscharfen Menge ausdrückt. Die Funktion µ(x) bewertet jedes Element der Menge mit einer reellen Zahl im Intervall zwischen 0 und 1. Der Zugehörigkeitswert µ(x=0) kennzeichnet dabei die Nichtzugehörigkeit und der Zugehörigkeitswert µ(x=1) die beste Zugehörigkeit eines Elementes zur Menge. Es ergibt sich dabei die aus den FIG 6 und 7 vorgegebene Abhängigkeit mit nunmehr stetiger Änderung.

Die Zugehörigkeitsfunktionen µ(x) entsprechend den FIG 8 und 9 drücken inhaltlich jeweils eine Möglichkeitsbewertung aus. Sie unterscheiden sich damit wesentlich von der Wahrscheinlichkeitsbewertung in der Statistik. Mit einer so definierten Zugehörigkeit µ(x) wird die Unschärfe in einem Rechner darstellbar und berechenbar. Speziell für das Energiemanagement nach einem der FIG 1 bis 5 lassen sich so vorteilhafte Anwendungen herleiten.

Wenn man die Regeln der Fuzzy-Logik zu einer komplexen Regel vergröbert und in einem Fuzzy-Petri-Netz-Modell als unscharfe Transition zusammenfaßt, wird das Energiemanagement weiter verbessert.

Das Fuzzy-Petri-Netz ist ein Modellkonzept für operative Entscheidungsprozesse in komplexen Produktionssystemen, indem die Kenntnisse über Systemstruktur gemeinsam mit technologischen Erfahrungen der Anlageexperten für die Auswahl von operativen Steueraktivitäten genutzt werden. Dabei lassen sich in bekannter Weise zwischen Prozeß und Fuzzy-Petri-Netzen Zuordnungen definieren, die insbesondere die Komponenten des Petri-Netzes mit dem Energieverteilungssystem verknüpft. Beispielsweise entsprechen die Transitionen des Petri-Netzes bestimmten Steueroperationen, die Plätze des Petri-Netzes bestimmten Arbeitsfortschrittsbestimmungen, der Markenstrom des Petri-Netzes dem Objekt bzw. Stoffstrom und die Flußreaktion des Petri-Netzes der Systemstruktur einer beliebigen Produktionsanlage.

Wenn der Arbeitsfortschritt in einem komplexen System durch das asynchrone Zusammenwirken mehrerer parallel wirkender Teilprozesse bestimmt wird, sind Petri-Netze zur Beschreibung der jeweils nacheinander und parallel auszuführenden Steueroperationen besonders geeignet. Damit verbindet das Fuzzy-Petri-Netz-Konzept die Unschärfe der Fuzzy-Technologie mit dem Beschreibungskonzept von parallelen Vorgängen durch Petri-Netze.

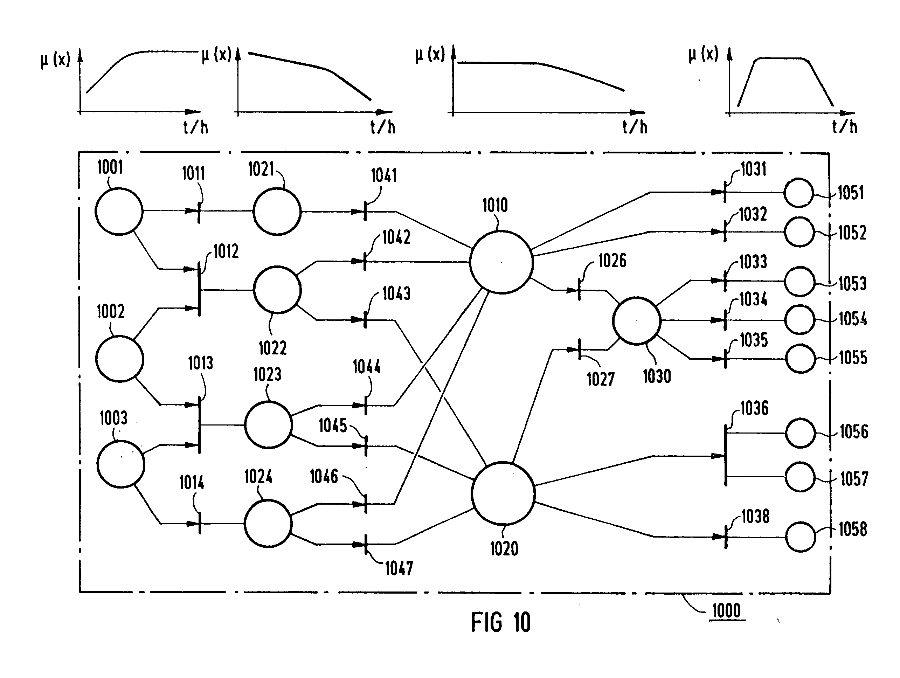

Für die Anwendung bei einem Energieverteilungssystem ergibt sich in vorteilhafte Weise die Modellierung mit einem Fuzzy-Petri-Netz. Dies ist in FIG 10 im einzelnen speziell für die Modellierung des Dampfnetzes einer integrierten Zellstoff-und Papierfabrik dargestellt: Dabei sind die Prozeßbedingungen durch Plätze, d.h. Kreise im Modell, verdeutlicht. Der Eintrag von elektrischer Energie wird durch Lastregler der einzelnen Verbraucher geregelt. Diese sind die Energiesystemkontrollelemente und werden im Petri-Netz als Übergänge dargestellt, welche die Energie von einem Erzeuger zu einem Verbraucher überträgt. Letzterer Verbrauch wird flexibel gehalten durch die Reglereinstellung und ist daher als sogenannter Fuzzy-Schaltpunkt der Übergänge vorgegeben.

Bei der angegebenen Zellstoff- und/oder Papierfabrik mit vorgegebenen Elektroenergie- und Dampfströmen wird das in FIG 10 gezeigte Fuzzy-Petri-Netz als Modellkonzept für die Dampfverteilung verwendet. Mit diesem Modell werden die parallel und asynchron auszuführenden Ventilstellungen für die Dampfströme zwischen den Erzeugern und Verbrauchern situationsbezogen bestimmt. Die Steueraktionen bzw. Stellelementeinstellungen werden dabei mit ihren Einsatzbedingunggen unscharf durch Transitionen (senkrechte Striche) und Plätze (Kreise) im Petri-Netz ausgedrückt. Die Verfügbarkeit der Energieerzeuger und die Anforderungen der Verbraucher beschreiben dabei die Prozeßbedingungen für das Verstellen der Dampfströme und werden durch Plätze im Modell gekennzeichnet, die entsprechend den Verbrauchern mit Marken gefüllt sind. Zur Veränderung der Erzeugung bzw. des Verbrauches dienen nicht im einzelnen dargestelle Stellorgane. Sie drücken damit die Steuermöglichkeiten in der Energieverteilung aus. Im Petri-Netz werden letztere durch Transitionen beschrieben, die den Dampf aus dem vorgelagerten System in einem vorgegebenen Verhältnis auf das nachgelagerte System übertragen. Da der Übertragungsvorgang flexibel ist, wird er auch als Unscharfverhalten der Transitionen bezeichnet. Der Markeninhalt der Plätze bestimmt damit den Zeitpunkt für Veränderungen in den angrenzenden Transitionen. Durch das Schalten der Transitionen entsteht somt zwischen den Plätzen ein Markenstrom, der wie der Dampfstrom zwischen den Erzeugern, Verteilern und Verbraucher von den Eingangsplätzen auf Ausgangsplätze transformiert wird.

In den Plätzen wird der Markeninhalt durch eine unscharfe Zugehörigkeitsfunktion µ(x) entsprechend den FIG 8 und 9 bewertet. Diese Unschärfe signalisiert die Notwendigkeit, die Erzeugung und den Verbrauch zu verändern. Der Zugehörigkeitswert 1 beschreibt die Einhaltung des Sollwertes und verlangt deshalb keine Veränderungen. Ein Wert kleiner als 1 drückt dagegen eine Abweichung vom Sollwert aus. Er bewirkt einen Einfluß auf das Stellorgan, das jedoch nur dann reagiert, wenn dadurch keine weitere Verschlechterung eines anderen Teilsystems ausgelöst wird. Derartige Vorgänge können sich iterativ wiederholen.

Im Fuzzy-Petri-Netz werden somit nur solche Steuerhandlungen ausgewählt, die sich kooperativ zueinander verhalten. Durch die unscharfe Bewertung der Steuerhandlungen an den Transitionen wird erreicht, daß zur Verbesserung der Verbraucher-oder Erzeugerniveaus nur zulässige Dampfströme ausgeführt werden. In Abhängigkeit von der Größe der Störung sind somit unscharfe Kompromisse zwischen der Erfüllung von Soll-Erzeuger- und Verbraucherzuständen und Soll-Dampfströmen möglich. Die Wahl der Zugehörigkeitsfunktionen µ(x) an den Plätzen und Transitionen ermöglicht, daß bei der Auswahl von Steuerhandlungen in dem Dampfsystem gleichermaßen Expertenerfahrungen berücksichtigt werden können. Enge, steil abfallende Zugehörigkeitsfunktionen kennzeichnen dabei Erzeuger- und Verbraucher-Niveaus oder Dampfströme, die unbedingt einzuhalten sind, während breite, flach abfallende Zugehörigkeitsfunktionen eine hohe Variabilität der entsprechenden Komponenten des Dampfsystems ausdrücken.

In FIG 10 sind in dem dargestellten Fuzzy-Petri-Netz 1000 drei Kessel 1001, 1002 und 1003 und vier Turbinen 1021 bis 1024 fakultativ einer Niederdruck(ND)-Dampfschiene 1010 und einer Hochdruck(HD)-Dampfschiene 1020 zugeordnet. Letzteren ist ein Dampfspeicher 1030 nachgeschaltet und es sind eine Reihe von Verbrauchern 1051 bis 1058 vorhanden. Zwischen diesen einzelnen Plätzen sind - wie oben im einzelnen erläutert - die jeweils zugehörigen Transitionen des Fuzzy-Petri-Netzes dargestellt und im einzelnen mit 1011 bis 1014, 1026, 1027, 1031 bis 1038 und 1041 bis 1047 bezeichnet. Weiterhin sind in den Spalten der in FIG 10 angegebenen Plätze in der ersten Zeile jeweils beispielhaft einzelne Zugehörigkeitsfunktionen µ(x) angedeutet.

In Anwendung für eine integrierte Zellstoff- und Papierfabrik, bei der beispielsweise als jeweils einzelne Verbraucher zur Herstellung von Zellstoff und/oder Papier, beispielsweise Verbraucher 1051 die Kocherei, 1052 die Wäsche, 1053 der Flockentrockner, 1054 die Heizung, 1055 die Bleicherei, 1056 die Kocherei, 1057 die Eindampfung und 1058 die Papiermaschine bedeuten, ergibt sich eine vollständige Modellierung des Dampfnetzes mit dem Fuzzy-Petri-Netz.

Durch das Fuzzy-Petri-Netz können die bereits definierten Systemverbindungen und -verwandschaften flexibilisiert werden. Derartige Modelle können mit großer Effizienz bei den anhand der FIG 1 bis 5 beschriebenen Energieverteilungssystemen eingesetzt werden.

Dem Fuzzy-Petri-Netz-Modell ist eine Inferenzmaschine zugeordnet. Zusammen mit dieser Inferenzmaschiine bildet es ein wissensbasiertes System. Die Inferenzmaschine ist dabei speziell für das Fuzzy-Petri-Netz entwickelt. Das Fuzzy-Petri-Netz selbst bildet die Wissensbasis.

Die Inferenz läuft wie folgt ab: Ausgehend von dem am schlechtesten bewerteten Platz werden die angrenzenden Transitionen (Einstellungen) so lange verändert, bis der Platz nicht mehr der schlechteste ist. Das wird so lange iterativ für alle Plätze wiederholt, bis die Zielbewertung des Netzes ein Optimum ist. Die Einstellungen der Transitionen werden zum Prozeß durchgeschaltet und überführen dann online das Netz in den nächsten Zustand. In diesem neuen Zustand beginnt der Inferenzzyklus von neuem. Durch Änderung der Zugehörigkeitsfunktionen an Plätzen und Transitionen wird das Entscheidungsverhalen der Inferenzmaschine programmiert, z.B. indem ein Platz eine engere Zugehörigkeitsfunktion und dadurch eine höhere Empfindlichkeit erhält, so daß bei der Inferenz andere Transitionseinstellungen ausgelöst werden.

## Patentansprüche

1. Verfahren zur Energieverteilung in Systemen, insbesondere in komplexen technischen Anlagen mit einer Mehrzahl von Teilanlagen, mit Mitteln zur Umwandlung von primären Energieträgern in elektrische Energie einerseits und in Prozeßdampf andererseits und mit mehreren Energieverbrauchern, **dadurch gekennzeichnet,** daß zur optimalen Energieverteilung im System, bei dem alle Teilanlagen bzw. Verbraucher in ihrem Arbeitsbereich betrieben werden, Fuzzy-Logik verwendet wird, wozu zur Koordinierung der Energieverteilung und der Energieerzeugung das Erfahrungswissen der Betreiber in Fuzzy-Regeln umgesetzt wird, wobei die Fuzzy-Regeln Informationen der einzelnen Verbraucher über ihren aktuellen Elektroenergie- und Dampfbezug, ihren jetzigen und zukünftigen Energiestatus und die Dringlichkeit der Energielieferung für die Aufrechterhaltung der Produktion enthalten.

2. Verfahren nach Anspruch 1, **dadurch gekennzeichnet**, daß die von einzelnen Verbrauchern abzunehmenden Energiemengen zyklisch mit Hilfe der Fuzzy-Regeln festgelegt werden.

3. Verfahren nach Anspruch 1, **dadurch gekennzeichnet**, daß die Fuzzy-Regeln zum Betrieb Automatisierungssystems des, das die Energieverteilung und die Energieerzeugung koordiniert, verwendet werden.

4. Verfahren nach Anspruch 3, **dadurch gekennzeichnet**, daß Fuzzy-Logik in Kombination mit mathematischen Modellen und Bilanzierungsmethoden für die Energieverteilung verwendet werden.

5. Verfahren nach Anspruch 2, **dadurch gekennzeichnet**, daß die Fuzzy-Regeln das Zuschalten von Dampferzeugern und Turbinen einerseits und den Elektroenergiebezug aus dem Netz andererseits beinhalten.

6. Verfahren nach Anspruch 5, **dadurch gekennzeichnet,** daß für den Elektroenergiebezug aus Fremdnetzen zusätzliche Informationen aus den Durchschnittstagekurven des Gesamtenergieverbrauchs verwendet werden.

7. Verfahren nach Anspruch 6, **dadurch gekennzeichnet**, daß zeit zyklische Verbrauchskurven zum Aufstellen von Fuzzy-Regeln für die Energieplanung genutzt werden.

8. Verfahren nach einem der vorhergehenden Ansprüche, **dadurch gekennzeichnet**, daß im System den einzelnen Verbrauchern spezifische Wertigkeiten zugeordnet werden.

9. Verfahren nach einem der vorhergehenden Ansprüche, **dadurch gekennzeichnet**, daß die Fuzzy-Regeln über Petri-Netze in ein Fuzzy-Petri-Netz- eingebunden werden.

10. Verfahren nach Anspruch 1 und Anspruch 9, **gekennzeichnet** in der Anwendung bei einer Zellstoff- und/ oder Papierfabrik, insbesondere zur Steuerung des Dampfhaushaltes unterschiedlicher Verbraucher in der Zellstoff- und/ oder Papierfabrik.

11. Verfahren nach Anspruch 10, **dadurch gekennzeichnet**, daß für die Anwendung bei der Zellstoff- und/oder Papierfabrik zur Aufstellung der Fuzzy-Regeln
- die Aktionsregeln der Anlagenbediener
- das Wissen über die Produktion durch Prozeßanalysen und
- das Wissen, das durch Bilanzierung und Modellierung der Dampf- und Energieströme gewonnen wurde, verwendet wird.

12. Anordnung zur Durchführung des Verfahrens nach Anspruch 1 oder einem der Ansprüche 2 bis 11 mit Turbinen und/oder Kesseln zur Erzeugung von Elektroenergie einerseits und Prozeßdampf andererseits und mit mehreren Verbrauchern, **dadurch gekennzeichnet**, daß zwischen den Turbinen (50) und/oder den Kesseln (50, 51) und den Verbrauchern (121, 122) wenigstens ein Fuzzy-System (100) angeordnet ist, das aus einem ersten Block (I) zur Bewertung der Gesamtsituation, einem zweiten Block (II) zur Bewertung der Verbraucher und einem dritten Block (III) zum Festlegen der Einzelbezüge an Energie besteht.

13. Anordnung nach Anspruch 12, **dadurch gekennzeichnet**, daß das Fuzzy-System (100) eine Anzahl einzelner Fuzzy-Regler (101 bis 111) umfaßt.

14. Anordnung nach Anspruch 12, **dadurch gekennzeichnet**, daß einzelne Fuzzy-Regler (103, 104) Mittel (130,140) zur Online-Veränderung der Zugehörigkeitsfunktionen bei der Fuzzifizierung aufweisen.

15. Anordnung nach Anspruch 12, **dadurch gekennzeichnet**, daß dem Fuzzy-System Petri-Netze zugeordnet sind, die zusammen ein Fuzzy-Petri-Netz-Modell (100) bilden.

## Claims

1. Method for energy distribution in systems, in particular in complex technical plants having a plurality of plant sections, having means for the conversion of primary sources of energy into electric energy on the one hand and into process steam on the other hand, and having a plurality of energy consumers, characterised in that for the optimal energy distribution in the system, in which case all plant sections or consumers are operated in their working range, fuzzy logic is used, for which purpose, in order to coordinate the energy distribution and the energy generation, the empirical knowledge of the operator is converted into fuzzy rules, with the fuzzy rules containing items of information of the individual consumers about their current drawing of electric energy and steam, their current and future energy status and the urgency of the delivery of energy in order to maintain production.

2. Method according to claim 1, characterised in that the amounts of energy to be tapped by individual consumers is established cyclically with the aid of the fuzzy rules.

3. Method according to claim 1, characterised in that the fuzzy rules are used to operate the automation system which coordinates the energy distribution and the energy generation.

4. Method according to claim 3, characterised in that fuzzy logic is used in combination with mathematical models and balancing methods for the energy distribution.

5. Method according to claim 2, characterised in that the fuzzy rules involve the connection of steam generators and turbines on the one hand and the drawing of electric energy from the network on the other hand.

6. Method according to claim 5, characterised in that for the drawing of electric energy from external networks, additional items of information from the average daily curves of the total energy consumption are used.

7. Method according to claim 6, characterised in that cyclical consumption curves are used to set up fuzzy rules for the energy planning.

8. Method according to one of the preceding claims, characterised in that in the system, specific priorities are allocated to the individual consumers.

9. Method according to one of the preceding claims, characterised in that the fuzzy rules are interconnected by way of Petri networks into a fuzzy-Petri network.

10. Method according to claim 1 and claim 9, characterised in the use in a cellulose and/or paper factory, in particular in order to control the steam balance of different consumers in the cellulose and/or paper factory.

11. Method according to claim 10, characterised in that for the use in the cellulose and/or paper factory
- the operating rules of the plant operator
- the knowledge about the production through process analyses and
- the knowledge which was obtained by balancing and modelling of the flows of steam and energy
are used to set up the fuzzy rules.

12. Arrangement for carrying out the method according to claim 1 or one of the claims 2 to 11, having turbines and/or boilers for generating electric energy on the one hand and process steam on the other hand and having a plurality of consumers, characterised in that arranged between the turbines (50) and/or the boilers (50, 51) and the consumers (121, 122) is at least one fuzzy system (100), which consists of a first block (I) for evaluating the overall situation, a second block (II) for evaluating the consumers and a third block (III) for establishing the individual drawings of energy.

13. Arrangement according to claim 12, characterised in that the fuzzy system (100) comprises a number of individual fuzzy controllers (101 to 111).

14. Arrangement according to claim 12, characterised in that individual fuzzy controllers (103, 104) have means (130, 140) for the on-line alteration of the membership functions during the fuzzification.

15. Arrangement according to claim 12, characterised in that Petri networks are allocated to the fuzzy system, which together form a fuzzy-Petrinetwork model (100).

## Revendications

1. Procédé pour répartir de l'énergie dans des systèmes, notamment dans des installations techniques complexes comportant une pluralité d'installations partielles, comportant des moyens pour transformer des sources d'énergie primaires en énergie électrique d'une part et en vapeur de processus d'autre part et comportant plusieurs dispositifs consommateurs d'énergie, caractérisé en ce que pour une répartition d'énergie optimale dans le système, selon laquelle toutes les installations partielles ou dispositifs consommateurs fonctionnent dans leur zone de fonctionnement, on fait appel à une logique floue, pour laquelle on utilise pour coordonner la répartition d'énergie et la production d'énergie les connaissances dues à l'expérience de l'utilisateur dans des règles de logique floue, les règles de logique floue contenant des informations des dispositifs consommateurs individuels en ce qui concerne leur vapeur et énergie électrique actuelle, leur état d'énergie présent et futur et l'urgence de fourniture d'énergie pour le maintien de la production.

2. Procédé suivant la revendication 1, caractérisé en ce que les quantités d'énergie prélevées par les dispositifs consommateurs individuels sont déterminées de manière cyclique à l'aide des règles de logique floue.

3. Procédé suivant la revendication 1, caractérisé en ce que les règles de logique floue sont utilisées pour faire fonctionner le système d'automatisation. qui coordonne la répartition d'énergie et la production d'énergie

4. Procédé suivant la revendication 3, caractérisé en ce que la logique floue est utilisée en combinaison avec des modèles mathématiques et des procédés de formation de bilan pour la répartition d'énergie.

5. Procédé suivant la revendication 2, caractérisé en ce que des règles de logique floue contiennent la mise en circuit d'une part des producteurs de vapeur et des turbines et d'autre part l'acquisition d'énergie électrique provenant du réseau.

6. Procédé suivant la revendication 5, caractérisé en ce que pour l'acquisition d'énergie électrique provenant de réseaux étrangers, on utilise, des informations supplémentaires provenant des courbes quotidiennes moyennes de la consommation totale d'énergie .

7. Procédé suivant la revendication 6, caractérisé en ce que on utilise des courbes de consommation cycliques dans le temps pour établir des règles de logique floue pour la planification de l'énergie.

8. Procédé suivant l'une des revendications précédentes, caractérisé en ce que dans le système, des pondérations spécifiques sont associées aux dispositifs consommateurs individuels.

9. Procédé suivant l'une des revendications précédentes, caractérisé en ce que les règles de logique floue sont intégrées par des réseaux de Pétri dans un réseau de Pétri de logique floue.

10. Procédé suivant la revendication 1 et la revendication 9, caractérisé par une utilisation dans une papeterie ou une installation de fabrication de pâte chimique, notamment pour commander le régime de vapeur de différents dispositifs consommateurs dans la papeterie et/ou l'installation de fabrication de pâte chimique.

11. Procédé suivant la revendication 10, caractérisé en ce que pour l'utilisation dans une papeterie et/ou installation de fabrication de pâte chimique, on utilise, pour l'établissement des règles de logique floue
- les règles d'action de l'utilisateur de l'installation,
- les connaissances concernant la production par analyse de processus et,
- les connaissances que l'on obtient par formation de bilan et modélisation des courants d'énergie et de vapeur.

12. Dispositif pour la mise en oeuvre du procédé suivant la revendication 1 ou l'une des revendications 2 à 11, comportant des turbines et/ou des chaudières pour produire de l'énergie électrique d'une part et de la vapeur de processus d'autre part, et comportant plusieurs dispositifs consommateurs, caractérisé en ce que, entre les turbines (50) et/ou les chaudières (50, 51) et les dispositifs consommateurs (121, 122), il est inerposé au moins un système (100) à logique floue. qui est constitué d'un premier bloc (I) pour l'évaluation de la situation globale, d'un deuxième bloc (II) pour l'évaluation des dispositifs consommateurs et d'un troisième bloc (III) pour la détermination des acquisition individuelle d'énergie.

13. Dispositif suivant la revendication 12, caractérisé en ce que le système (100) à logique floue comprend un certain nombre de régulateurs (101 à 111) à logique floue individuels.

14. Dispositif suivant la revendication 12, caractérisé en ce que des régulateurs (103, 104) à logique floue individuels comportent des moyens (130, 140) destinés à une modification en ligne des fonctions d'appartenance lors de la fuzzification.

15. Dispositif suivant la revendication 12, caractérisé en ce qu'il est associé au système à logique floue des réseaux de Pétri, qui forment ensemble un modèle (100) de réseau de Pétri à logique floue.
